(19) Europäisches Patentamt
European Patent Office
Office européen des brevets

(11) EP 0 798 329 B1

(12) EUROPÄISCHE PATENTSCHRIFT

(45) Veröffentlichungstag und Bekanntmachung des Hinweises auf die Patenterteilung:
**03.01.2001 Patentblatt 2001/01**

(51) Int Cl.[7]: **C08G 64/30**

(21) Anmeldenummer: **97104489.6**

(22) Anmeldetag: **17.03.1997**

# (54) Zweistufenverfahren zur Herstellung von thermoplastischem Polycarbonat

Two step process for the preparation of thermoplastic polycarbonate

Procédé en deux étapes pour la préparation de polycarbonate thermoplastique

(84) Benannte Vertragsstaaten:
**BE DE ES IT NL**

(30) Priorität: **27.03.1996 DE 19612139**

(43) Veröffentlichungstag der Anmeldung:
**01.10.1997 Patentblatt 1997/40**

(73) Patentinhaber: **BAYER AG**
**51368 Leverkusen (DE)**

(72) Erfinder:
- **Kühling, Steffen, Dr.**
  **40670 Meerbusch (DE)**
- **Schebesta, Klaus**
  **51371 Leverkusen (DE)**
- **Hucks, Uwe**
  **46519 Alpen (DE)**
- **Ullrich, Martin**
  **51375 Leverkusen (DE)**
- **Schuchardt, Heinrich**
  **51373 Leverkusen (DE)**
- **Bachmann, Rolf, Dr.**
  **51469 Bergisch Gladbach (DE)**
- **Fischer, Thomas, Dr.**
  **47809 Krefeld (DE)**
- **Kohlgrüber, Klemens, Dr.**
  **51515 Kürten (DE)**
- **Rhiel, Franz Ferdinand, Dr.**
  **41540 Dormagen (DE)**
- **Zaby, Gottfried, Dr.**
  **51375 Leverkusen (DE)**

(56) Entgegenhaltungen:
**EP-A- 0 528 210**
**EP-A- 0 529 093**
**EP-A- 0 726 285**
**DE-A- 1 495 730**
**DE-A- 4 312 390**

- **DATABASE WPI Week 50 1974 Derwent Publications Ltd., London, GB; AN 86251V XP002052183 & JP 49 082 796 A (MITSUBISHI GAS CHEM CO INC) , 9.August 1974**
- **PATENT ABSTRACTS OF JAPAN vol. 014, no. 406 (C-0754), 4.September 1990 & JP 02 153926 A (NIPPON G II PLAST KK), 13.Juni 1990,**

EP 0 798 329 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von lösungsmittelfreiem, verzweigungsarmem Polycarbonat nach dem Schmelzeumesterungsverfahren, ausgehend von aromatischen Diphenolen, Kohlensäurediarylestern, Katalysatoren und gegebenenfalls Verzweiger, bei dem in einer ersten Stufe zur Herstellung von Oligocarbonat Stickstoff- oder Phosphorbasen in Mengen von $10^{-4}$ bis $10^{-8}$ mol, bezogen auf 1 mol Diphenol eingesetzt werden, und nach Zugabe des Katalysators bei einem Druck von 100 Pa bis Atmosphärendruck und Erhöhung der Temperatur auf bis zu 290°C unter Abdestillieren von Monophenol ein Oligocarbonat hergestellt wird, wobei das intermediär gebildete Oligocarbonat einen OH-Endgruppengehalt von 10 % bis 35 mol-% aufweist, und dieses in einer nachfolgenden Stufe bei einer Temperatur von 240°C bis 340°C, bevorzugt von 260°C bis 330°C und besonders bevorzugt von 280°C bis 320°C und unter einem Druck von 1 bis 50 000 Pa in 10 bis 60 Minuten zum Polycarbonat polykondensiert wird, wobei die zweite Stufe in einem speziellen Hochviskosreaktor durchgeführt wird, der einen hohen Selbstreinigungsgrad und ein großes freies Nutzvolumen aufweist.

Die nach dem erfindungsgemäßen Verfahren hergestellten Polycarbonate sind verzweigungsarm, lösungsmittelfrei, mit heller Eigenfarbe ausgestattet und besitzen niedrige OH-Endgruppengehalte.

In der Patentschrift US 3 442 854 werden quartäre Ammonium- bzw. Phosphoniumverbindungen als Katalysatoren bei der Schmelzeumesterung beschrieben. In der Polykondensationsstufe wurde jedoch bei dem bekannten Verfahren, um zu hochmolekularem Polycarbonat zu gelangen, eine Reaktionstemperatur von >300°C über mehrere Stunden (mehr als 4 Stunden) angewendet. Die dabei entstehenden Produkte sind nicht verzweigungsarm (siehe Vergleichsbeispiele 1 und 2) und die Raum-Zeit-Ausbeute ist überdies unbefriedigend. Ein selbstreinigender Hochviskosreaktor wird auch nicht eingesetzt.

In der US-Patentschrift 5 412 061 wird ein Umesterungsverfahren zur Herstellung von Polycarbonat beschrieben, bei dem Tetraorganophosphoniumcarboxylate als Katalysatoren eingesetzt werden.

Hierbei wird die Polykondensation in einem Kessel durchgeführt, wobei die Polykondensationszeit ca. 90 Minuten beträgt.

Der OH-Endgruppengehalt der nach diesem Verfahren erhältlichen Polycarbonate ist vergleichsweise hoch. Das Arbeiten im Kessel bedingt aufgrund von Produktablagerung bzw. von unerwünschten Nebenreaktionen an den Wänden das Auftreten von Stippen bzw. Quellkörpern im Produkt. Die vergleichsweise lange Reaktionszeit führt überdies zu einer unerwünschten Verzweigung im Endprodukt.

Es wurde gefunden, daß durch Einstellen eines bestimmten OH/-Arylcarbonat-Endgruppenverhältnisses der intermediär gebildeten Oligocarbonate und durch die Zweistufenkatalyse ein verzweigungsarmes OH-endgruppenarmes Polycarbonat in kurzer Polykondensationszeit mit wirtschaftlichem Durchsatz hergestellt werden kann, wenn ein selbstreinigender Hochviskosreaktor mit hohem Selbstreinigungsgrad und großem freiem Nutzvolumen in der zweiten Stufe der Umesterung eingesetzt wird.

Gegenstand der Erfindung ist ein Zwei stufen-Verfahren zur Herstellung von verzweigungsarmem Polycarbonat durch Schmelzeumesterung von Diphenolen und Kohlensäurediarylestern in Gegenwart von Katalysator und gegebenenfalls Verzweigern, dadurch gekennzeichnet, daß man in der ersten Stufe zur Herstellung von Oligocarbonat der Mischung von Diphenol und Kohlensäurediarylester Stickstoff- oder Phosphorbasen in einer Menge von $10^{-2}$ bis $10^{-8}$ Mol, bezogen auf 1 mol Diphenol zusetzt, nach Zugabe des Katalysators die Temperatur der Mischung auf bis zu 290°C bringt, bei einem Druck von 100 Pa bis Normaldruck, und bei der Reaktion freiwerdende Monophenole abdestilliert, wobei das in der ersten Stufe gebildete Oligocarbonat einen OH-Endgruppengehalt von 10 bis 35 mol-% aufweist, daß man das Oligocarbonat in der zweiten Stufe bei einer Temperatur von 240 bis 340°C, bevorzugt von 275°C bis 330°C, insbesondere von 280 bis 310°C und einem Druck von 1 bis 50 000 Pa innerhalb von 10 bis 60 Minuten in einem selbstreinigenden Hochviskosreaktor mit einem Selbstreinigungsgrad (flächenbezogen) von > 95 %, inbesondere > 98 %, und einem freien Nutzvolumen von mindestens 50 %, bevorzugt ≥ 65 %, besonders bevorzugt ≥ 75 %, zum Polycarbonat polykondensiert.

Verzweigungsarmes Polycarbonat im Sinne des erfindungsgemäßen Verfahrens heißt, daß der Gehalt an Verzweiger der Formel (I)

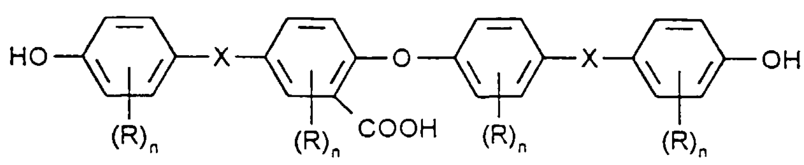

(I),

worin X = $C_1$-$C_8$-Alkyliden oder -Cycloalkyliden, S oder einer Einfachbindung und R = $CH_3$, Cl oder Br und n Null, 1

oder 2 ist,
im Polycarbonat nach Totalverseifung des PCs und HPLC-Bestimmung der Verseifungsprodukte einen Wert von 75 ppm nicht übersteigt.

Für das erfindungsgemäße Verfahren geeignete Diphenole sind solche der Formel (II)

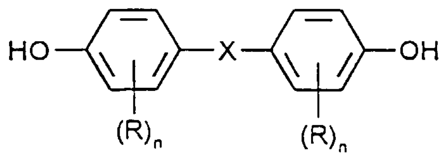

(II)

worin X, R und n die für die Definition von Formel (I) genannten Bedeutungen haben.

Bevorzugte Diphenole sind z.B.

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexana.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Kohlensäurediarylester im Sinne vorliegender Erfindung sind Di-$C_6$-$C_{14}$-Arylester, vorzugsweise die Diester von Phenol oder alkylsubstituierten Phenolen, also Diphenylcarbonat oder z.B. Dikresylcarbonat. Bezogen auf 1 mol Bisphenol werden die Kohlensäurediester besonders in Mengen von 1,01 bis 1,30 mol, bevorzugt von 1,02 bis 1,15 mol eingesetzt.

Es ist darauf zu achten, daß die Reaktionskomponenten für die erste Stufe (Oligocarbonatsynthese), also die Diphenole und die Kohlensäurediarylester weitgehend frei von Alkali- und Erdalkaliionen sind, wobei Mengen von kleiner 0,1 ppm an Alkali- und Erdalkaliionen toleriert werden können. Derart reine Diphenole bzw. Kohlensäurediarylester sind z.B. erhältlich, indem man die Kohlensäurediarylester bzw. Diphenole umkristallisiert, wäscht und destilliert. Beim erfindungsgemäßen Verfahren soll der Gehalt an Alkali- und Erdalkalimetallionen sowohl im Diphenol als auch im Kohlensäurediester einen Wert von <0,1 ppm betragen. Der Gesamtgehalt an Chlor der Rohstoffe sollte einen Wert von 2 ppm nicht übersteigen und der Gehalt an verseifbarem Chlor des Kohlensäurediesters einen Wert von 0,05 ppm nicht übersteigen. Für die Farbe des resultierenden Polycarbonats ist es insbesondere von Vorteil, wenn die Rohstoffe, also die Diphenole und die Kohlensäurediarylester, im Falle einer destillativen Reinigung der Rohstoffe im letzten Schritt der Herstellung, die feste Phase nicht durchlaufen haben, also eine Schmelze- bzw. Mischschmelze der Rohstoffe in die Umesterungsreaktion eingesetzt wird oder zumindest einer der Rohstoffe flüssig dosiert wird.

Die Polycarbonate können durch den Einsatz geringer Mengen Verzweiger bewußt und kontrolliert verzweigt werden. Einige geeignete Verzweiger sind:

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,1-Bis-(4',4''-dihydroxytriphenyl)-methyl)-benzol und insbesondere

α,α',α''-Tris-(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Unter verzweigungsarmem Polycarbonat im Sinne der Erfindung wird ein Polycarbonat verstanden, bei dem das Auftreten unkontrollierter Verzweigungen z.B. aufgrund unerwünschter Nebenreaktionen verhindert ist.

Unterschieden wird davon die bewußte Verzweigung durch den Zusatz von Verzweigern z.B. solchen wie vorstehend beschrieben

Die gegebenenfalls mitzuverwendenden 0,05 bis 2 mol-%, bezogen auf eingesetzte Diphenole, an Verzweigern, können mit den Diphenolen zusammen eingesetzt werden.

Für die Oligocarbonatsynthese werden Stickstoff- und Phosphor-Basen als Katalysatoren eingesetzt, bevorzugt Ammonium- und Phosphoniumkatalysatoren sowie Guanidin- und Phosphazen-Basen.

Bevorzugte Katalysatoren im Sinne des erfindungsgemäßen Verfahrens für die Herstellung der Oligocarbonatstufe sind Verbindungen der allgemeinen Formel (III) und (IV)

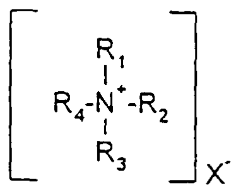

(III)

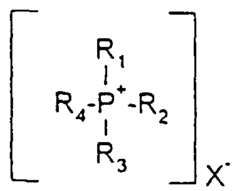

(IV)

wobei $R_1$ bis $R_4$ gleich oder verschieden Alkyl-, Aryl- oder Cycloalkylreste sind und $X^-$ ein Anion einer Säure ist, bei dem das korrespondierende Säure-Base-Paar $H^+ + X^- \Leftrightarrow HX$ einen $pK_B$ von <11 besitzt.

Besonders geeignete Katalysatoren im Sinne des erfindungsgemäßen Verfahrens sind beispielsweise: Tetramethylammoniumhydroxid, Tetramethylammoniumacetat, Tetramethylammoniumfluorid, Tetramethylammoniumtetraphenylboranat, Tetraphenylphosphoniumfluorid, Tetraphenyl-phosphoniumtetraphenylboranat, Dimethyldiphenylammoniumhydroxid, Tetraethylammonium-hydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base $P_1$-t-Oct = tert.-Octyl-iminotris-(dimethylamino)-phosphoran, Phosphazen-Base $B_1$-t-Butyl I tert.-Butyliminotris-(dimethylamino)-phosphoran, BEMP = 2-tert.-Butylimino-2-diethylamino-1,3-dimethyl-perhydro-1,3-diaza-2-phosphorin.

Der Katalysator wird in Mengen von $10^{-2}$ bis $10^{-8}$ mol, bezogen auf 1 mol Diphenol, eingesetzt. Katalysatoren können auch in Kombination von zwei oder mehreren verschiedenen miteinander eingesetzt werden.

Die Oligocarbonate der ersten Stufe weisen bevorzugt ein mittleres Molekulargewicht $M_w$ von 9000 bis 24 000, besonders bevorzugt von 12 000 bis 20 000 auf, ermittelt durch Messung der relativen Lösungsviskosität in Dichlormethan (bei 25°C und einer Konzentration von 5 g/l) oder in Mischungen gleicher Gewichtsmengen Phenol/o-Dichlorbenzol geeicht durch Lichtstreuung. Alle Molgewichtsangaben beziehen sich soweit nicht anders erwähnt auf das Zahlenmittel. Das Molekulargewicht der Oligocarbonate der 1. Stufe richtet sich danach, wie die gewünschte Endviskosität des Polycarbonats der zweien Stufe sein soll; so werden durch die Kondensation von niedrigmolekularen Oligocarbonaten niedrigmolekulare Polycarbonate in der zweiten Stufe erhalten und durch die Kondensation von höhermolekularen Oligocarbonaten höhermolekulare Polycarbonate erhalten. Die so hergestellten Oligocarbonate müssen einen OH-Endgruppengehalt von 10 % bis 35 %, bevorzugt von 15 % bis 30 % aufweisen entsprechend:

$$X\,\% = \frac{\text{Zahl der OH-Endgruppen}}{\text{Gesamtzahl der Endgruppen}} \cdot 100$$

Das OH/Arylcarbonat-Endgruppenverhältnis der Oligocarbonate wurde z.B. durch getrennte Bestimmung der OH-Endgruppen mittels photometrischer Bestimmung mit $TiCl_4$ einerseits sowie Ermittlung der Arylcarbonat-Endgruppen durch HPLC-Bestimmung des nach Totalverseifung gebildeten Monophenols andererseits ermittelt.

Die Temperatur zur Herstellung dieser Oligocarbonate beträgt bevorzugt von 100°C bis 290°C, bevorzugt von 150°C bis 280°C. Die bei der Umesterung von Oligocarbonat entstehenden Monophenole werden bei einem Druck von 50 Pa bis Normaldruck bevorzugt von 100 bis 50 000 Pa insbesondere destillativ entfernt.

In der zweiten Stufe, der Polykondensation des Oligocarbonats, kann es für die Herstellung höhermolekularer Polycarbonate (z.B. mit einem Molgewicht $M_w$ >24 000) vorteilhaft sein, zusätzlich Alkali/Erdalkalimetallkatalysator in das Oligocarbonat zuzugeben. Die Alkali-/Erdalkalimetallkatalysatoren werden bevorzugt in Mengen von $10^{-8}$ bis $10^{-4}$ mol bezogen auf 1 mol Diphenol, besonders bevorzugt in einer Konzentration von $10^{-7}$ bis $10^{-5}$ mol eingesetzt. Es sind beispielsweise die Lithium-, Natrium-, Kalium-, Cäsium-, Calzium-, Barium-, Magnesium-, -hydroxide, -carbonate, -halogenide, -phenolate, -diphenolate, -fluoride, -acetate, -phosphate, -hydrogenphosphate, -boranate.

Die Zugabe des Alkali-/Erdalkalimetallkatalysators kann z.B. als Feststoff oder als Lösung bzw. Masterbatch z.B. in Wasser, Phenol, Diarylcarbonat, Oligocarbonat oder Polycarbonat erfolgen.

Gegenstand der Erfindung ist somit auch die Mitverwendung von Alkali- oder Erdalkalikatalysatoren.

Die zweite Stufe des erfindungsgemäßen Verfahrens, die Polykondensation, wird in 10 bis 60 Minuten in einem speziellen Hochviskosreaktor durchgeführt. Hierfür werden Reaktoren mit großem freien Nutzvolumen eingesetzt, die sich kinematisch selbst reinigen. Bei der Rotation der Wellen solcher Mischer werden die Begrenzungen des Produktraumes z.B. die Bauelemente: Abstreifer, Trägerelemente, Wellen oder Gehäuse im Rahmen der mechanischen Spiele durch gegenseitiges Kämmen kinematisch weitgehend bzw. vollständig gereinigt. Geeignete Hochviskosreaktoren sind z.B. in den europäischen Offenlegungsschriften EP 460 466, EP 528 210, EP 638 354 sowie in den deutschen Patentanmeldungen mit dem Aktenzeichen P 44 43 151.1 und P 44 43 154.6 beschrieben.

Vorteilhaft für den Einsatz im erfindungsgemäßen Verfahren ist an den beschriebenen Hochviskosreaktoren, daß sie ein ausreichend großes freies Nutzvolumen besitzen, um einerseits ausreichend lange Produktverweilzeiten zu ermöglichen, daß sie eine gute Förderwirksamkeit besitzen, um andererseits nicht zu lange Verweilzeiten zu verursachen und das Produkt nicht zu lange thermisch zu belasten. Die gemäß der Erfindung einzusetzenden Reaktoren sollen große Produktoberflächen ausstreichen und diese Oberflächen häufig erneuern, so daß bei vergleichsweise niedrigerer Temperatur ein hoher Reaktionsfortschritt erzielt werden kann. Eine möglichst oft erneuerte Oberfläche der flüssigen Phase erleichtert den Übertritt der Monophenole in die Gasphase.

Bei Prozessen mit Stoffübergang aus einer flüssigen in eine Gasphase, zu denen auch Polykondensationsreaktionen gehören, sind die Vorgänge:

1. Stofftransport innerhalb der flüssigen Phase,

2. Bereitstellung großer Oberflächen/Phasengrenzflächen für den Stoffaustausch zwischen den Phasen und

3. Stofftransport in der Gasphase aus dem System

von besonderer Bedeutung. Der Stofftransport aus der Gasphase wird üblicherweise durch Absaugen sichergestellt.

Die erfindungsgemäß einzusetzenden Hochviskosreaktoren sollen nun eine möglichst große benetzbare Metalloberfläche im Reaktionsraum aufweisen, die den Stoffaustausch zwischen Reaktionsmischung und Gasphase erleichtert.

Bei der Drehung der Rotoren werden auf den benetzten Metalloberflächen von Gehäuse und Rotoren dünne Filme mit großen Oberflächen ausgestrichen. Vorteilhaft ist eine große benetzbare Metalloberfläche. Als von der Gerätegröße unabhängiges Maß kann das Verhältnis aus benetzbarer Gesamtoberfläche (Rotoren und umschließendes Gehäuse) zu umschließender (Gehäuseinnen-)Oberfläche herangezogen werden. Um die Vergleichbarkeit sicherzustellen, sollte dabei das Gehäuse als die Rotoren umschließend, d.h. ohne erweiterten Brüdenraum mitzuberechnen, angenommen werden.

Bevorzugt werden im erfindungsgemäßen Verfahren Hochviskosreaktoren eingesetzt, die ein Verhältnis von Gesamtoberfläche/umschließender Gehäuseoberfläche von > 2,5 bevorzugt > 3 aufweisen.

Der andere Aspekt, die Durchmischung in der flüssigen Phase, wird ebenfalls durch das Zusammenwirken der Rotoren bestimmt. Dabei ist ihre Eingriffskinematik von Bedeutung: um Totvolumina zu vermeiden, in denen Produkt undefiniert lange verweilt, sollten die Rotoren das Gehäuse und sich gegenseitig möglichst vollständig abstreifen. Um die kinematische Selbstreinigung zu quantifizieren, wird ein flächenbezogener Selbstreinigungsgrad definiert, der den Anteil der kinematisch gereinigten Flächen im Verhältnis zur produktberührten Gesamtoberfläche des Reaktors angibt. Dieser beträgt > 95 %, bevorzugt > 98 %. Analog läßt sich auch ein volumenbezogener Selbstreinigungsgrad definieren. Der volumenbezogene Selbstreinigungsgrad ist das Verhältnis aus der Differenz von freiem Nutzvolumen minus ungereinigtem Volumen zu freiem Nutzvolumen. Das Verhältnis beträgt im bevorzugten Verfahren < 15 %, unter Berücksichtigung eines Spieles von Schabern etc. von 1 %, bezogen auf den Gehäusedurchmesser, bzw. < 6 % bei Annahme eines Spieles von 0. Dabei wird unter ungereinigtem Volumen das maximal mögliche Volumen von Ablagerungen auf kinematisch nicht gereinigten Oberflächen verstanden (das nicht durch Kinematik abgetragen wird). Diese Volumina stellen Totvolumina dar, in denen das Produkt mit erhöhter Verweilzeit verbleibt und nur allmählich und undefiniert durch Strömungskräfte ausgetauscht werden kann.

Um Prozesse, die eine bestimmte Venveilzeit erfordern, wirtschaftlich bei großen Durchsätzen durchführen zu können, ist es nun vorteilhaft, Reaktoren mit großem produkterfüllbarem Volumen zu verwenden. Um das produkterfüllbare Volumen bei gleicher Baugröße möglichst groß zu halten, sollten daher die Rotoren möglichst wenig Volumen erfüllen. Als Maß wird das freie Nutzvolumen als Verhältnis aus Gehäuseinnenvolumen bei eingebauten Rotoren zu Gehäuseinnenvolumen bei nicht eingebauten Rotoren herangezogen. Es beträgt im erfindungsgemäßen Verfahren für den Hochviskosreaktor mindestens 50 %, bevorzugt ≥ 65 %, insbesondere ≥ 75 %.

Durch Kombination der erfindungsgemäßen Merkmale kann wirtschaftlicher Durchsatz bei gleichzeitig guter Produkteigenschaft, wie im erfindungsgemäßen Verfahren beschrieben, erzielt werden.

Die aromatischen Polycarbonate erhältlich nach dem erfindungsgemäßen Verfahren die ebenfalls Gegenstand der Erfindung sind, sollen ein mittleres Molgewicht $M_w$ von 18 000 bis 60 000, vorzugsweise von 19 000 bis 40 000 haben, ermittelt durch Messung der relativen Lösungsviskosität in Dichlormethan oder in Mischungen gleicher Gewichtsmengen Phenol/o-Dichlorbenzol geeicht durch Lichtstreuung.

Dies wird dadurch erreicht, daß bevorzugte niedrigmolekulare Oligocarbonate durch Monophenoldestillation zu niedrigviskosem Polycarbonat und höhermolekulare Oligocarbonate zu höherviskosen Polycarbonaten polykondensiert werden.

Der OH-Endgruppengehalt des entstehenden Polycarbonats beträgt insbesondere <20 %, bevorzugt <15 %, besonders bevorzugt <10 % und ganz besonders bevorzugt <5 %.

Zur Begrenzung der mittleren Gewichtsmolmassen $M_w$ der Polymeren können in bekannter Weise (siehe z. B. EP 360 578) Molmassenregler, wie beispielsweise Alkylphenol, in den berechneten Mengen eingesetzt werden.

Darüber hinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH- und Carbonsäure-Endgruppen, Polyphenylensulfid-Blöcke mit OH-Endgruppen, Polyphenylenoxid-Blöcke mit OH-Endgruppen.

Den erfindungsgemäß hergestellten Polycarbonaten können noch die üblichen Stabilisatoren gegen UV-Licht oder Wärme und beispielsweise Entformungsmittel zugesetzt werden. Sie können in bekannter Weise mit anderen Thermoplasten, beispielsweise mit ABS, abgemischt werden.

## Beispiele

### Vergleichsbeispiel 1

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wird durch Evakuieren und Spülen mit Stickstoff (3 mal) vom Luftsauerstoff befreit und das Gemisch auf 150°C aufgeheizt. Jetzt werden 0,0039 g $N(CH_3)_4B(C_6H_5)_4$ ($2 \cdot 10^{-3}$ mol-%) bezogen auf Bisphenol A, als Feststoff eingesetzt, und das entstehende Phenol bei 10 000 Pa abdestilliert. Gleichzeitig wird die Temperatur bis auf 250°C gesteigert. Nach 1 Stunde wird der Druck auf 1 000 Pa vermindert. Durch weiteres Vermindern des Druckes auf 50 Pa und Temperaturerhöhung auf 310°C wird die Polykondensation in 4 h erreicht. Man erhält ein farbhelles, lösungsmittelfreies Polycarbonat mit einer relativen Lösungsviskosität von 1,276 (Dichlormethan, 25°C, Konzentration 5 g/l). Der Gehalt an Verzweiger der Formel (V) in hergestellten Polycarbonat beträgt 210 ppm.

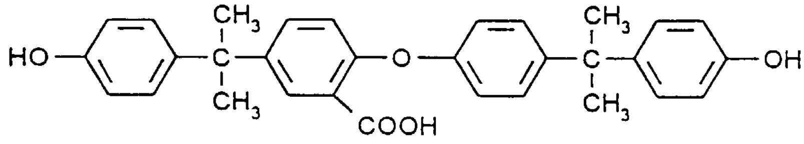

(V)

### Vergleichsbeispiel 2

Es wird wie in Vergleichsbeispiel 1 gearbeitet, die Polykondensationstemperatur beträgt jedoch 320°C. Man erhält ein farbhelles, lösungsmittelfreies Polycarbonat mit einer relativen Lösungsviskosität von 1,335 (Dichlormethan, 25°C, 5 g/l). Der Gehalt an Verzweiger der Formel (V) im hergestellten Polycarbonat beträgt 410 ppm.

**Beispiele 1 und 2**

In einer halbtechnischen Versuchsanlage können die Rohstoffe Diphenylcarbonat (DPC) und Bisphenol A (BPA) gemeinsam nach Inertisierung mit Stickstoff aufgeschmolzen werden. Weiter ist die Übernahme flüssig angelieferter Rohstoffe möglich.

Bei separater Dosierung (flüssig angelieferte Rohstoffe) werden 49,37 kg BPA/h und 52,83 kg DPC/h, nach gemeinsamem Aufschmelzen 102,2 kg Schmelze (aus 175 Gew.-Teilen BPA und 187,25 Gew.-Teilen DPC)/h in die mehrstufige Versuchsanlage eingespeist.

Als Katalysator wird $PPh_4BPh_4$ als 1 %ige Lösung in Phenol vor Eintritt in die Reaktoren kontinuierlich zugemischt (142 g Lösung/h, entspricht $1 \cdot 10^{-3}$ mol-%).

Die Schmelze wird über einen Wärmetauscher auf 190°C erwärmt und nach 20 min Verweilzeit über einen Röhrenverdampfer in einen unter einem Vakuum von 150 mbar stehenden Abscheider mit Rührer entspannt und gleichzeitig auf 240°C aufgeheizt. Die Verweilzeit im Abscheider beträgt 25 min. Die Brüden werden über eine Kolonne in einen Kondensator geleitet. Aus dem Abscheider wird das Oligocarbonat in einen Scheibenreaktor gefördert. Die Temperatur wird auf 280°C und der Druck auf 50 Pa eingestellt. Die Verweilzeit beträgt 35 min. Das entstandene Oligocarbonat wird kontinuierlich mit $5 \cdot 10^{-4}$ mol-% Natriumphenolat als Katalysator in Form eines 0,1 gew.-%igen Masterbatches in Polycarbonat (126 g/h) versetzt und in den erfindungsgemäßen Hochviskosreaktor gefördert. Unter 20 Pa und bei Temperaturen von 295°C erfolgt bei 26 Upm die Aufkondensation zu hochmolekularem Polycarbonat. Die Verweilzeit beträgt 23 min. Die Brüden aus beiden Reaktoren werden in gekühlte Abscheider geleitet. Das entstandene Polycarbonat wird als Strang abgezogen und granuliert.

Die Tabelle 1 gibt die Eigenschaften der nach den Beispielen 1 und 2 hergestellten Polycarbonate wieder.

Der in Tabelle 1 genannte "Yellowness Index" wurde nach: ASTM Designation: D1925-70 (Reapproved 1988) aus "Annual Book of ASTM Standards" Vol. 08.02 (1991) S.150, entnommen und gibt das Maß für die optische Güte eines transparenten Kunststoffes an.

Tabelle 1

| Bei-spiel | BPA | DPC | $\eta_{rel}$ realtive Viskosität Oligocarbonat | -OH-Gehalt [ppm] Oligocarbonat | -OH in mol-% der End-gruppen | $\eta_{rel}$ Poly-carbonat | -OH-Gehalt [ppm] Polycarbonat | -OH in mol-% der Endgruppen | Anteil an Ver-zweiger der Formel (V) [ppm] | Yellowness Index |
|---|---|---|---|---|---|---|---|---|---|---|
| 1 | flüssig übernommen (170°C) | flüssig übernommen (110°C) | 1,215 | 660 | 21 | 1,296 | 190 | 8 | 17 | 1,22 |
| 2 | gemeinsam mit DPC aufgeschmolzen (150°C) | ← | 1,209 | 840 | 26 | 1,292 | 290 | 12 | 22 | 1,91 |
| Vergleichsbeispiele | | | | | | | | | | |
| 1 | fest | fest | | | | 1,276 | 310 | 14 | 210 | 3,6 |
| 2 | fest | fest | | | | 1,335 | 220 | 10 | 410 | 4,2 |

## Patentansprüche

1. Zweistufen-Verfahren zur Herstellung von verzweigungsarmem Polycarbonat durch Schmelzeumesterung von Diphenolen und Kohlensäurediarylestern in Gegenwart von Katalysator und gegebenenfalls Verzweigem, in dem man in der ersten Stufe zur Herstellung von Oligocarbonat der Mischung von Diphenol und Kohlensäurediarylester Stickstoff- oder Phosphorbasen in einer Menge von $10^{-2}$ bis $10^{-8}$ Mol, bezogen auf 1 mol Diphenol zusetzt, nach Zugabe des Katalysators die Temperatur der Mischung auf bis zu 290°C bringt, bei einem Druck von 100 Pa bis Normaldruck, und bei der Reaktion freiwerdende Monophenole abdestilliert und man das Oligocarbonat in der zweiten Stufe bei einer Temperatur von 240 bis 340°C, bevorzugt von 275°C bis 330°C, insbesondere von 280 bis 310°C und einem Druck von 1 bis 50 000 Pa polykondensiert, dadurch gekennzeichnet, daß das in der ersten Stufe gebildete Oligocarbonat einen OH-Endgruppengehalt von 10 bis 35 mol-% aufweist und daß man das Oligocarbonat in der zweiten Stufe innerhalb von 10 bis 60 Minuten in einem selbst reinigenden Hochviskosreaktor mit einem flächenbezogenen Selbstreinigungsgrad von > 95% und einem freien Nutzvolumen von mindestens 50% zum Polycarbonat polykondensiert.

2. Verfahren zur Herstellung von aromatischem Polycarbonat gemäß Anspruch 1, dadurch gekennzeichnet, daß der Gehalt an Verzweiger der Formel (I):

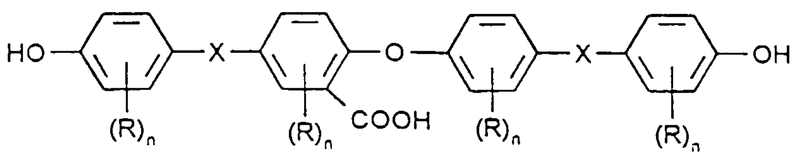

(I)

worin X für $C_1$-$C_8$-Alkyliden oder -Cycloalkyliden, Schwefel oder eine Einfachbindung, R für $CH_3$, Cl oder Br und der Index n für Null, 1 oder 2 steht,
im Polycarbonat nach Totalverseifung des Polycarbonates und HPLC-Bestimmung der Verseifungsprodukte einen Wert von 75 ppm nicht übersteigt.

3. Verfahren zur Herstellung von aromatischem Polycarbonat in der Schmelze gemäß den Ansprüchen 1 oder 2, dadurch gekennzeichnet, daß die zweite Stufe des Verfahrens unter Zugabe von Alkali- und/oder Erdalkalimetallsalzen in einer Menge von $10^{-4}$ bis $10^{-8}$ mol, bezogen auf 1 mol Diphenol, durchgeführt wird.

4. Verfahren zur Herstellung von aromatischem Polycarbonat in der Schmelze gemäß den Ansprüchen 1 bis 3, dadurch gekennzeichnet, daß der Gehalt an phenolischen OH-Endgruppen im fertigen Polycarbonat weniger als 20 mol-% beträgt.

5. Verfahren zur Herstellung von aromatischem Polycarbonat in der Schmelze gemäß den Ansprüchen 1 bis 4, dadurch gekennzeichnet, daß die einzusetzenden Diphenole und Kohlensäurediarylester nach ihrer Herstellung bzw. Reinigung durch Destillation bis zum Einsatz in der ersten Stufe des Verfahrens in flüssiger Phase belassen werden.

6. Verfahren gemäß den Ansprüchen 1 bis 4, dadurch gekennzeichnet, daß in der ersten Stufe Oligocarbonat mit einem Molekulargewicht (Zahlenmittel) von 9000 bis 24000 hergestellt wird.

## Claims

1. Two-step process for the production of low-branching polycarbonate by melt transesterification of diphenols and carboxylic acid diaryl esters in the presence of catalyst and optionally branching agents, in which nitrogen or phosphorus bases are added in a quantity of $10^{-2}$ to $10^{-8}$ mol, based on 1 mol diphenol, to the mixture of diphenol and carboxylic acid diaryl ester in the first step for the production of oligocarbonate, after adding the catalyst the temperature of the mixture is brought to up to 290°C, under a pressure of 100 Pa to atmospheric pressure, and monophenols evolved during the reaction are distilled off, and in the second step the oligocarbonate is polycondensed at a temperature of 240 to 340°C, preferably of 275°C to 330°C, especially of 280 to 310°C and under a pressure of 1 to 50 000 Pa,
characterised in that the oligocarbonate formed in the first step has an -OH terminal group content of 10 to 35

mole %, and that, in the second step, the oligocarbonate is polycondensed to the polycarbonate within 10 to 60 minutes in a self-cleaning high-viscosity reactor with an area-based degree of self-cleaning of > 95% and a free effective volume of at least 50%.

**2.** Process for the production of aromatic polycarbonate according to claim 1, characterised in that the content of branching agents of formula (I):

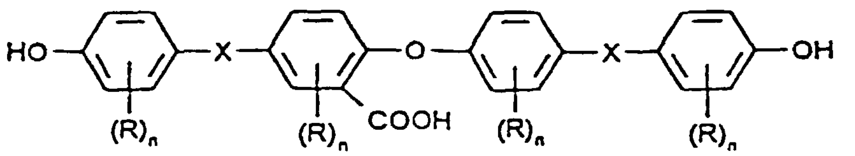

(I)

where X stands for $C_1$-$C_8$ alkylidene or cycloalkylidene, sulphur or a single bond, R stands for $CH_3$, Cl or Br and the index n stands for zero, 1 or 2,
in the polycarbonate does not exceed a value of 75 ppm after total saponification of the polycarbonate and HPLC determination of the saponification products.

**3.** Process for the production of aromatic polycarbonate in the melt according to claims 1 or 2, characterised in that the second step of the process is carried out with addition of alkali and/or alkaline-earth metal salts in a quantity of $10^{-4}$ to $10^{-8}$ mol, based on 1 mol diphenol.

**4.** Process for the production of aromatic polycarbonate in the melt according to claims 1 to 3, characterised in that the content of phenolic -OH terminal groups in the finished polycarbonate is less than 20 mole %.

**5.** Process for the production of aromatic polycarbonate in the melt according to claims 1 to 4, characterised in that the diphenols and carboxylic acid diaryl esters to be used are left in the liquid phase after their production or purification by distillation until used in the first step of the process.

**6.** Process according to claims 1 to 4, characterised in that in the first step oligocarbonate is produced with a molecular weight (number average) of 9000 to 24000.

### Revendications

**1.** Procédé en deux étapes pour la préparation de polycarbonate faiblement ramifié par transestérification en fusion de diphénols et d'esters diaryliques de l'acide carbonique en présence de catalyseurs et, le cas échéant, d'agents de ramification, dans lequel: dans la première étape pour la préparation de l'oligocarbonate, on ajoute au mélange du diphénol et de l'ester diarylique de l'acide carbonique, des bases azotées ou phosphorées en une quantité de $10^{-2}$ à $10^{-8}$ mole rapportée à 1 mole de diphénol; après addition du catalyseur, on amène la température du mélange jusqu'à 290°C, sous une pression allant de 100 Pa à la pression normale; on sépare par distillation les monophénols qui se libèrent lors de la réaction; et, dans la seconde étape, à une température de 240 à 340°C, de préférence de 275°C à 330°C, en particulier de 280 à 310°C et sous une pression allant de 1 à 50 000 Pa, on soumet l'oligocarbonate à une polycondensation, caractérisé en ce que l'oligocarbonate formé dans la première étape présente une teneur en groupes terminaux OH de 10 à 35 moles %, et en ce que, dans la seconde étape, on soumet l'oligocarbonate à une polycondensation pour obtenir un polycarbonate dans un laps de temps de 10 à 60 minutes dans un réacteur à autonettoyage destiné à des produits très visqueuses, possédant un degré d'autonettoyage rapporté à la surface > 95% et un volume utile libre d'au moins 50%.

**2.** Procédé pour la préparation de polycarbonate aromatique selon la revendication 1, caractérisé en ce que la teneur en agents de ramification répondant à la formule (I):

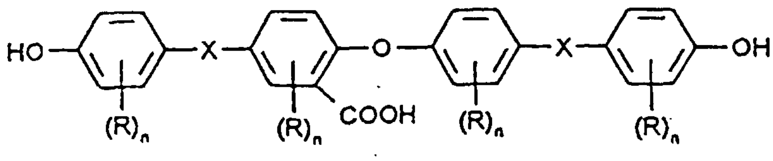

(I)

dans laquelle X représente un groupe alkylidène ou un groupe cycloalkylidène en $C_1$-$C_8$, un atome de soufre ou une liaison simple, R représente un groupe $CH_3$, un atome de chlore ou un atome de brome, et l'indice n représente zéro, 1 ou 2,
du polycarbonate après saponification totale du polycarbonate et dosage des produits de saponification par HPLC, ne dépasse pas une valeur de 75 ppm.

**3.** Procédé pour la préparation de polycarbonate aromatique en fusion selon les revendications 1 ou 2, caractérisé en ce qu'on effectue la seconde étape du procédé en ajoutant des sels de métaux alcalins et/ou de métaux alcalino-terreux en une quantité de $10^{-4}$ à $10^{-8}$ mole, rapportée à 1 mole de diphénol.

**4.** Procédé pour la préparation de polycarbonate aromatique en fusion selon les revendications 1 à 3, caractérisé en ce que la teneur du polycarbonate prêt à l'emploi en groupes terminaux OH phénoliques est inférieure à 20 moles %.

**5.** Procédé selon les revendications 1 à 4, caractérisé en ce que les diphénols et les esters diaryliques de l'acide carbonique à mettre en oeuvre sont laissés en phase liquide après leur préparation, respectivement après leur purification par distillation jusqu'à leur mise en oeuvre dans la première étape du procédé.

**6.** Procédé pour la préparation de polycarbonate aromatique en fusion selon les revendications 1 à 4, caractérisé en ce qu'on prépare, dans la première étape, un oligocarbonate possédant un poids moléculaire (moyenne en nombre) de 9000 à 24000.